(19) Europäisches Patentamt

European Patent Office

Office européen des brevets

(11) EP 1 708 508 A1

(12) EUROPEAN PATENT APPLICATION

(43) Date of publication:
04.10.2006 Bulletin 2006/40

(51) Int Cl.:
$H04N\ 7/26^{(2006.01)}$

(21) Application number: 05007091.1

(22) Date of filing: 31.03.2005

(84) Designated Contracting States:
AT BE BG CH CY CZ DE DK EE ES FI FR GB GR
HU IE IS IT LI LT LU MC NL PL PT RO SE SI SK TR
Designated Extension States:
AL BA HR LV MK YU

(71) Applicant: MATSUSHITA ELECTRIC INDUSTRIAL
CO., LTD.
Kadoma-shi, Osaka 571-8501 (JP)

(72) Inventors:
• Wedi, Thomas
64823 Gross-Umstadt (DE)

• Wittmann, Steffen
63263 Neu-Isenburg (DE)
• Kondo, Satoshi
Yawata-shi
Kyoto 614-8361 (JP)

(74) Representative: Grünecker, Kinkeldey,
Stockmair & Schwanhäusser
Anwaltssozietät
Maximilianstrasse 58
80538 München (DE)

(54) **Video encoding and decoding with motion compensated temporal filtering**

(57)    The present invention relates to an improved scheme for video encoding and decoding based on motion compensated temporal filtering. A sequence of input images is decomposed in low frequency and high frequency image components. In the scheme of the present invention the low frequency image is calculated based on a single motion compensated prediction step.

Fig. 8

EP 1 708 508 A1

**Description**

The present invention relates to an improved method for encoding and decoding digital video data. Particularly, the invention relates to an improved method for decomposing a sequence of images into high frequency and low frequency components, and respective encoder and decoder.

Conventionally, video coding is based on a so-called hybrid video coding scheme. All standardized video coding schemes like MPEG-1, MPEG-2, MPEG-4, H.261, H.263 or H.264/AVC belong to this type of video coding schemes. In order to reduce redundancy, i.e. the bit rate, motion compensated prediction (MCP) is carried out in a first step of such a standard video coding scheme. With MCP, a current image to be encoded is predicted from one or more previously decoded images. Therefore, the temporal dependencies between the current image and previously transmitted image can be exploited for redundancy reduction.

MCP takes into account the motion of objects in order to appropriately reflect the changes between subsequent images caused by the motion of objects. The motion of objects is calculated on a block basis, wherein a motion vector is determined that reflects the motion for each of the blocks individually.

Specifically, a current field or frame is predicted from corresponding previous field or frame data. This prediction is based on an estimation of motion between current and previous fields or frames. The motion estimation is determined in terms of two-dimensional motion vectors, representing a displacement of pixels between the current and previous frames. Usually, motion estimation is performed on a block-by-block basis, wherein a block in a current frame is compared with blocks in previous frames until a best match is determined. Based on the comparison result, a displacement vector for each block of a current frame is estimated.

In a second step of the standard video coding schemes, the prediction error is determined by generating the difference between the current image and the motion compensated prediction thereof. The prediction error is then processed using a 2D spatial transform. The transform coefficients are subsequently quantized, entropy coded and transmitted together with the motion information including the motion vector to the decoder.

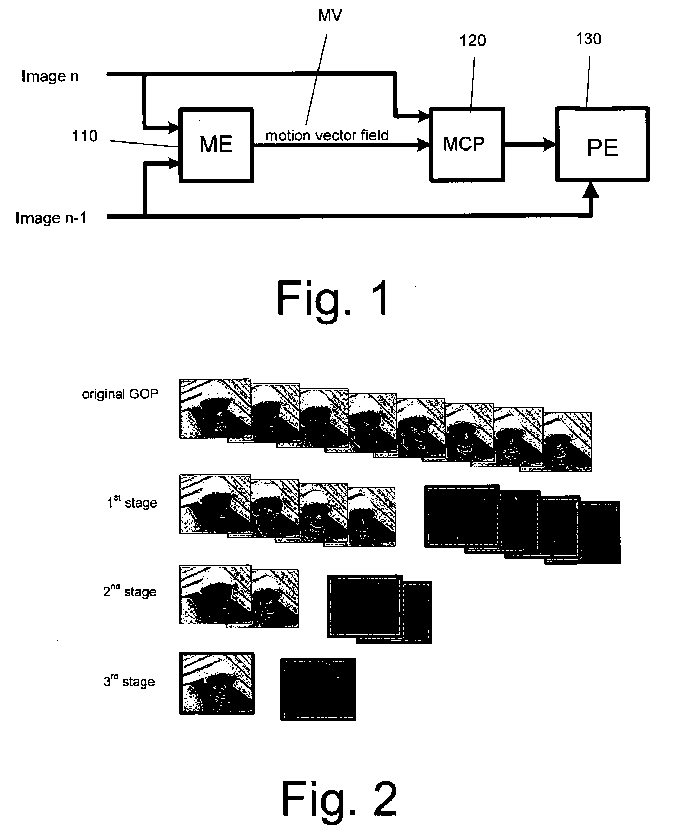

A general scheme of motion compensation is illustrated in Fig. 1. In a step of motion estimation ME, a motion vector field is determined from the data of two subsequent images n and n-1. Based on the motion vector field, a motion compensated prediction 120 of a subsequent image is generated from a previous image. The prediction error 130 is determined by comparing the motion compensated prediction and the original image.

In recent years, new video coding concepts have been developed that are based on motion compensated temporal filtering (MCTF). These schemes differ from the standardized schemes by using a transform also in temporal direction. Therefore, MCTF-based schemes improve the exploitation of temporal dependencies between images.

In order to achieve an efficient transformation in temporal direction, the motion in the image sequence has to be taken into account. In the past, a temporal transform has been employed for this purpose. The temporal transform is performed along the motion trajectory of several successive images. Such a transformation along the motion trajectory leads to serious problems with covered and uncovered background.

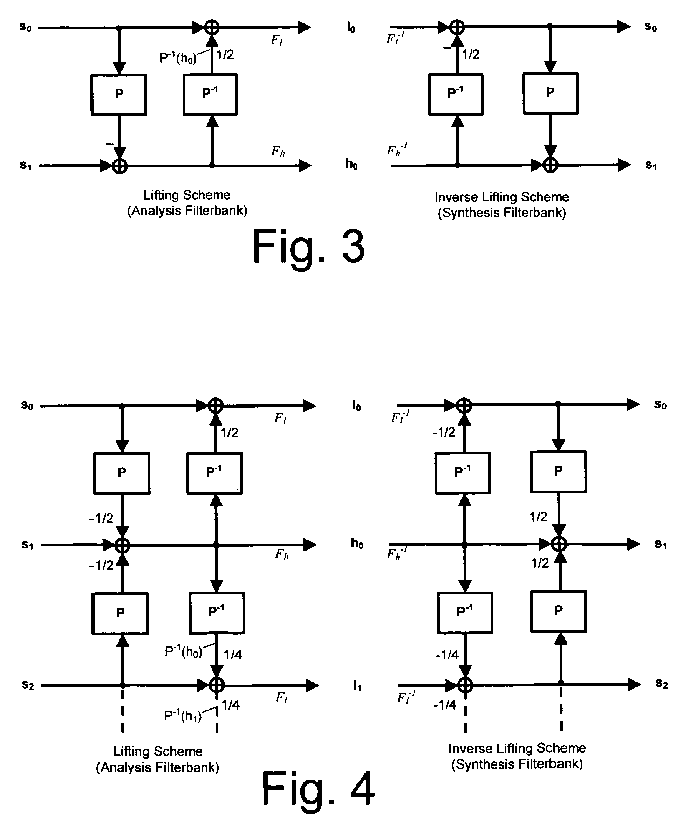

These problems have been overcome by the utilization of the so-called lifting scheme for performing the temporal transformation. The lifting scheme will be described in detail below in connection with Figs. 3 and 4.

The main principle of a video coding scheme based on MCTF is described by reference to Fig. 2. According to Fig. 2, the temporal sub-band decomposition of a sequence of input images is performed in a plurality of hierarchical processing stages. By way of example, Fig. 2 illustrates the principle of a MCTF-based video coding scheme of three stages.

The top row of images shown in Fig. 2 represents a group of original pictures GOP to be encoded. In the example of Fig. 2, the GOP consists of eight input pictures. In the first decomposition stage, the eight original pictures are decomposed to form four low frequency pictures shown on the left hand side of the "1st stage" images in Fig. 2 and four high frequency pictures shown on the right hand side. In the second stage, the four low frequency pictures output from the first stage are further decomposed into two low frequency and two high frequency pictures. In the third stage, the two low frequency pictures output from the second stage are decomposed into one low frequency and one high frequency picture.

In the further processing, only the black bordered pictures are coded for transmission to a decoder or storage purposes. This means, in the present example, that only the single (black framed) low frequency image output from the third state is transmitted together with seven high frequency images.

At the decoding side, the hierarchical encoding procedure is applied in inverse manner, i.e. starting from the resulting images of the final encoding stage until the original image sequence is completely reconstructed. The decoder can reconstruct the two low frequency images of the second stage by decoding the low and high frequency pictures from the third stage shown in Fig. 2. By additionally taking into account the two transmitted high frequency pictures from the second stage of Fig. 2, the four low frequency images of the first stage can be reconstructed. Finally, the decoder reconstructs the original GOP from the thus reconstructed low frequency images of the first stage and the four transmitted high frequency images of the first stage.

Each of the above encoding/decoding stages (1st to 3rd in Fig. 2) applies a lifting scheme for the temporal transformation. The lifting scheme will be explained in detail below in connection with Figs. 3 and 4.

The lifting scheme provides a decomposition of input images into low frequency components and high frequency components by applying a sequence of prediction and update steps. In the prediction steps a motion vector field ("prediction vector") is used in a similar manner as in a standardized video coding scheme like H.264/AVC. The update steps are based on a prediction with an inverse prediction vector.

Fig. 3 illustrates a basic configuration of a lifting scheme employed in an encoder (left) and a corresponding inverse lifting scheme employed in a decoder (right). The lifting scheme of Fig. 3 is based on a simple lifting filter (a so-called Haar lifting filter).

In Fig. 3, $s_0$ and $s_1$ denote two successive original images of an input image sequence GOP. In the prediction step P of the lifting scheme, $s_1$ is predicted from $s_0$ by using a motion compensated prediction. For this purpose a motion vector field is used in a similar manner as in a standardized video coding scheme like H.264/AVC. The prediction error is obtained by subtracting the thus generated prediction of $s_1$ on the basis of so from the original image $S_1$. This prediction error, denoted $h_0$ in Fig. 3, forms the high frequency image component to be further processed.

For the generation of the low frequency image $l_0$, the high frequency image $h_0$ is used as the input image of the update step $P^{-1}$. The update step performs a motion compensation that is based on an inverse motion vector field. Then, the low frequency image $l_0$ is calculated as a linear combination of the resulting image $P^{-1}(h_0)$ of the inverse prediction and the original image $s_0$. As can be seen from Fig. 3, the applied weighting coefficients of the linear combination are ½ for the inverse prediction of the high frequency image and 1 for the original image $s_0$. By such a linear combination, the high frequency part is eliminated from original image $s_0$ to form the resulting low frequency image $l_0$.

In the inverse lifting scheme on the decoder side, the low and high frequency images $l_0$ and $h_0$ are used to reconstruct the images so and $s_1$. The reconstruction procedure of the inverse lifting scheme is illustrated on the right hand side of Fig. 3.

The inverse lifting scheme employs the same direct and inverse prediction steps, P and $P^{-1}$ of the encoding side in reverse order. The first image so is reconstructed as a linear combination of an inverse prediction of high frequency image $h_0$ with weighting factor -1/2 and low frequency image $l_0$ with weighting factor 1. Subsequently a prediction of image $s_1$ is generated based on the reconstructed image so by prediction step P. The second reconstructed image $s_1$ is then obtained as the sum of the prediction of image $s_1$ and the high frequency image $h_0$.

Both images $s_0$ and $s_1$ are reconstructed by employing the identical steps of direct and inverse predictions as in the encoder. The inverse prediction step of the decoder uses the same motion vector field and signal $h_0$ as the inverse prediction step of the encoder. The prediction of the image $s_1$ to be reconstructed is obtained from the reconstructed image so based on the identical motion vector employed in the prediction step of the encoder.

Furthermore, motion compensated prediction using any possible motion model can be incorporated into the prediction and update steps. Therefore, it is possible to use lifting schemes that reuse the existing motion compensation tools of current standards.

The lifting scheme in Figure 3 can be interpreted as a Haar filter, which has the following filter coefficients:

$$\text{Coefficients for low-pass filter: } (1,1)/2 \qquad (1)$$

$$\text{Coefficients for high-pass filter: } (-1,1)$$

This interpretation can be proven easily if the prediction and update steps are assumed to

$$s_0 = P(s_0) \text{ and } h_0 = P^{-1}(h_0). \qquad (2)$$

This assumption is valid if the sequence contains no motion and is used to simplify the following calculations. With (2) the high frequency signal $h_0$ of Figure 3 is calculated to

$$h_0 = s_1 - s_0 \qquad (3)$$

which is equivalent to the Haar high-pass filter with its filter coefficients in equation (1). The tow-frequency signal $l_0$ can be calculated to

$$l_0=s_0+1/2 \, h_0 = s_0 + 1/2 \, (s_1-s_0)=1/2(s_0+s_1) \qquad (4)$$

which is equivalent to the Haar low-pass filter with its filter coefficients in equation (1).

The items indicated by $F_l$ and $F_h$ in Fig. 3 are appropriately chosen scaling factors that are applied for a normalization of the low and the high frequency images. In practice, these scaling factors do not need to be applied during the decomposition and reconstruction process, but can be incorporated when selecting the quantization step sizes during encoding.

The Haar lifting scheme of Fig. 3 is a very simple lifting scheme. A more efficient lifting scheme is the so-called 5/3 lifting. The block diagram of the 5/3 lifting scheme is shown in Fig. 4.

In this 5/3 lifting representation, the high frequency signal $h_0$ is calculated using two different predictions of image $s_1$. For linear combination, both predictions of $s_1$ are weighted by lifting coefficients - 1/2. In a corresponding manner, the low frequency signal $l_1$ is calculated on the basis of the inverse predictions of two different high frequency signals $P^{-1}(h_0)$ and $P^{-1}(h_1)$ and a weighting by lifting coefficients.

These calculations can be expressed by the following equations:

$$h_0= -1/2*P(s_0) + s_1 - 1/2*P(s_2) \qquad (5)$$

and

$$l_1=1/4*P^{-1}(h_0) + s_2 + 1/4* P^{-1} (h_1). \qquad (6)$$

Using

$$h_1= -1/2*P(s_2) + s_3 + -1/2*P(s_4) \qquad (7)$$

and assuming

$$s_i=P(s_i) \text{ and } h_i= P^{-1} (h_i), \text{ with } i=0,1,2,3 \qquad (8)$$

$l_1$ can be calculated to

$$\begin{aligned} l_1 \; &= 1/4*(-1/2*s_0 + s_1 + -1/2*s_2) + s_2 + 1/4*(-1/2*s_2 + s_3 + -1/2*s_4) \qquad (9)\\ &= -1/8*s_0 + 1/4*s_1 - 1/8*s_2 + s_2 - 1/8*s_2 +1/4*s_3 - 1/8*s_4\\ &= -1/8*s_0 + 2/8*s_1 - 6/8*s_2 +2/8*s_3 - 1/8*s_4 \end{aligned}$$

The filtering process of equations (7) and (9) can be expressed by the following filter coefficients

$$\text{Coefficients for low-pass filter: } (-1,2,6,2,-1)/8 \qquad (10)$$
$$\text{Coefficients for high-pass filter: } (-1,2,-1)/2.$$

As can be seen from the above formulas (7) - (10), a low frequency image is calculated on the basis of five subsequent original images, while three subsequent original images are used for the calculation of a high frequency image. Therefore, the lifting scheme in Fig. 4 is called 5/3 lifting filter. The filter coefficients represent the 5/3 wavelet filter kernels.

Compared to standardized hybrid video coding, the coding efficiency of motion compensated temporal filtering video coding schemes has been improved significantly. The concentration of energy is higher than in traditional hybrid coding. This can be seen, for instance, from the example of Fig. 2. In this example, the single low frequency picture output from a third decomposition stage contains the low frequency image information of the whole group of eight original images.

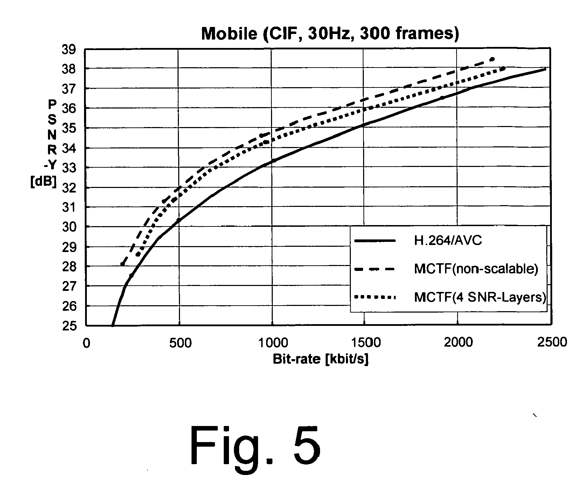

Fig. 5 provides a comparison between standard H.264/AVC and the MCTF extensions of H.264/AVC based on experimental results. In the rate distortion curves of Fig. 5, the picture quality is depicted in dependency on the bit rate.

Three different rate distortion-curves are shown in Fig. 5. The solid curve represents the state of the art H.264/AVC codec. The dashed and dotted curves show the results obtained with the MCTF extension of H.264/AVC. It can be seen that for the same picture quality (PSNR), both MCTF curves lead to a significantly reduced bit rate compared to standard H.264/AVC. In case of a non-scalable MCTF extension (dashed curve), the bit rate saving is about 30%. While the dashed curve is obtained from a non-scalable MCTF extension of H.264/AVC, the dotted curve is obtained from one scalable bit stream with 4 SNR-Layers. This means that even though all operation points of the dotted curve are obtained from one bit stream, the coding efficiency is improved compared to the non-scalable H.264/AVC codec. For obtaining the signal-to-noise-ratio (SNR) scalable representation, the concept that has already been used in previous video coding standards as H.262/MPEG-2 Visual, H.263, or MPEG-4 Visual is adapted to the MCTF extension.

From the high and low frequency images output from a motion compensated temporal filtering, the low frequency images are more important for the following reasons: First, as can be seen from the example in Fig. 2, the low frequency images of one decomposition stage are the basis for the next decomposition stage. To the contrary, the high frequency images are not used in further decomposition stages. Second, the low frequency images are directly output for displaying purposes if the sequence is decoded in a lower temporal resolution. To the contrary, the high frequency images are not displayed themselves.

It is a drawback of the above described conventional MCTF based video coding schemes that the quality of the generated low frequency images is influenced by inaccurate motion compensated prediction twice. Because of both the prediction and update (inverse prediction) steps including motion compensated prediction, the influence of inaccurate motion compensation on the low frequency signal is accumulated.

It is the object of the present invention to provide a temporal filtering encoder and decoder of improved coding efficiency and visual quality.

This is achieved by the features of the independent claims.

According to a first aspect of the present invention, a method of encoding a sequence of input images is provided. In a first step, an input image sequence is received. Then, a second image of the input image sequence is predicted based on a first image of the input image sequence according to a predetermined prediction rule. The input image sequence is decomposed into high frequency and low frequency images. The decomposing step generates a low frequency image by linear combining the predicted second image and the second image of the input image sequence.

According to another aspect of the present invention, a method of decoding an encoded sequence of images is provided. In a first step, high frequency and low frequency images are received together with a predetermined prediction rule. In further steps, a first image and a second image of the sequence of images are reconstructed. The first image is reconstructed by linear combining a high frequency image, and an inverse prediction of a corresponding low frequency image generated by applying the predetermined prediction rule in inverse manner to said corresponding low frequency image. The second image is reconstructed by linear combining the low frequency image and a prediction of the second image on the basis of said reconstructed first image according to said predetermined prediction rule.

According to a further aspect of the present invention, an encoder for encoding a sequence of input images is provided. The encoder comprises a predictor for predicting a second image of the input image sequence based on a first image of the input image sequence according to a predetermined prediction rule, and decomposing means for decomposing the input image sequence into high frequency and low frequency images. The decomposing means includes a first combiner for generating a low frequency image by linear combining the predicted second image and the second image of the input image sequence.

According to still a further aspect of the present invention, a decoder for decoding an encoded sequence of images is provided. The decoder comprises receiving means for receiving high frequency and low frequency images together with a predetermined prediction rule. Further, the decoder comprises a first reconstructor for reconstructing a first image of the sequence of images. The first reconstructor includes an inverse predictor for inverse predicting a low frequency image by applying the predetermined prediction rule in inverse manner to the low frequency image, and a first combiner for linear combining said inverse prediction of said low frequency image and a high frequency image. Further, the decoder comprises a second reconstructor for reconstructing a second image of the sequence of images. The second reconstructor includes a predictor for predicting the second image on the basis of the reconstructed first image according to said predetermined prediction rule and a second combiner for linear combining the low frequency image and said prediction of said second image.

It is the particular approach of the present invention to calculate a low frequency image of an improved image quality. For this purpose, a calculation scheme is proposed for the low frequency image generation, which only includes a single prediction step. In order to reconstruct the original images, on the decoder side, the low frequency image is processed by inverse prediction and the result is linear combined with the high frequency image to reconstruct a first original image. A second original image is predicted based on the first reconstructed image, and the prediction result is combined with the low frequency image to reconstruct the second original image. This particular approach results in an improved coding efficiency and an improved visual quality.

Preferably, in an encoder according to the present invention, the high frequency image is generated by linear combining the first image of the input image sequence and an inverse prediction of the low frequency image. The inverse prediction of the low frequency image is obtained by applying the predetermined prediction rule in inverse manner to the low frequency image.

According to a preferred embodiment, the second input image is further predicted based on at least a third input image. In this embodiment, the decomposing step generates the low frequency image by further including said at least one further prediction of the second image in the linear combination. Thus, the accuracy of the low frequency image can be further improved.

According to a further preferred embodiment, the linear combination for obtaining the low frequency image applies weighting coefficients to the second image and at least one predicted image. Preferably, the weighting coefficient of the second image is equal to the sum of the weighting coefficients of the predictions of the second image. More preferably, the weighting coefficients of all predictions of the second image are equal to give all the predictions the same weight.

According to a further preferred embodiment, inverse predictions of at least one further low frequency image are included in the decomposing step for generating the high frequency image. Thereby, the coding efficiency can be further increased.

In a further preferred embodiment, weighting coefficients are applied to the first image and the inverse prediction of the low frequency image in the linear combination for obtaining the high frequency image. Preferably, the sum of the weighting coefficients for obtaining the high frequency image is 0. Preferably, the sign of the weighting coefficient of the first image is inverse to the signs of the weighting coefficients of the inverse prediction images. Preferably, the weighting coefficients of all inverse prediction images are equal.

In a preferred embodiment of the present invention, the weighting coefficients of the second image and the predicted second image that are combined to generate the low frequency image, are equal to 1/2. Preferably, in this embodiment, in the linear combination for the generation of the high frequency image, the weighting coefficient of the first image is equal to -2, and the weighting coefficient of the inverse prediction image is equal to 2. Such an embodiment corresponds to a modification of the Haar lifting scheme described in detail above.

According to another preferred embodiment, the decomposing step generates a low frequency image on the basis of three subsequent images of the input image sequence. Preferably, in this embodiment, the decomposing step generates a high frequency image on the basis of five subsequent images of the input image sequence. Preferably, the decomposing step generates a low frequency image by linear combining the second image and the predictions of the second image on the basis of said first image and said third image of the input image sequence, and the decomposing step generates a high frequency image by linear combining said first image of the input image sequence and the inverse predictions of two subsequent low frequency images. Preferably, in the linear combination for generating the low frequency image, the weighting coefficient of the second image is 1/2 and the weighting coefficient of the predicted first images are 1/4. In the linear combination for generating the high frequency image, preferably, the weighting coefficient of the first image is equal to 4/3, and the weighting coefficient of the inverse predictions of low frequency images are equal to -2/3. Such an embodiment corresponds to a modification of the 5/3 lifting described in detail above.

According to a further preferred embodiment of the present invention, the predicting and decomposing steps are repeatedly applied, so that the resulting low frequency images output by one stage are employed as input image sequence for the repeated application. Preferably, the repetition is applied a predetermined number of stages. By using a predetermined number of stages m, an input image sequence consisting of a predetermined number of input images n, can be coded with maximum efficiency. An example, wherein m=3 and n=8 is depicted in Fig. 2.

Preferably, the predetermined prediction rule employed in the method according to the present invention includes a plurality of motion vectors. The prediction rule is preferably based on motion compensation. Preferably, the motion vectors are generated based on motion estimation. Thereby, every standard motion compensated prediction scheme can be utilized for the prediction step in an encoder according to the present invention.

According to a preferred embodiment, in a decoder of the present invention, the step of reconstructing a first image includes an inverse prediction of at least one further low frequency image in the linear combination.

Preferably, the linear combination for reconstructing the first image applies weighting coefficients to the high frequency image and the inverse prediction of low frequency images. More preferably, all the weighting coefficients of the inverse predictions of low frequency images are equal.

According to a further preferred embodiment of the present invention, the step of reconstructing a second image reconstructs the second image by including in the linear combination at least one further prediction of the second image on the basis of a third reconstructed image. The third reconstructed image is reconstructed in the same manner as the first reconstructed image. This means, that the third reconstructed image is reconstructed by linear combining a high frequency image and an inverse prediction of a low frequency image.

Preferably, the linear combination for reconstructing the second image applies weighting coefficients to the low frequency image and the predictions of the second image. Preferably the sign of the weighting coefficient of the low frequency image is inverse to the sign of the weighting coefficients of the predicted second images. Preferably, the weighting coefficients of all predictions of the second image are equal.

In a preferred embodiment, the first and the second original images are reconstructed on the basis of a single high frequency image and a single low frequency image. In this embodiment, preferably, the weighting coefficient of the high frequency image is equal to -1/2 and the weighting coefficient of the inverse prediction of the low frequency images is equal to 1. Preferably, the weighting coefficient of the low frequency image is equal to two and the weighting coefficient of the prediction of the second image is equal to -1. Such an embodiment corresponds to a modification of the inverse lifting scheme of the Haar filter described above.

In another preferred embodiment, the step of reconstructing a first image reconstructs the first image on the basis of one high frequency and two low frequency images. Preferably, in this embodiment, the step of reconstructing the second image reconstructs the second image on the basis of three low frequency and two high frequency images.

Preferably, in this embodiment, the step of reconstructing a first image reconstructs the first image by linear combining one high frequency image and the inverse prediction of two low frequency images, and the step of reconstructing second image of the sequence of images reconstructs the second image as a linear combination of a low frequency image and predictions of the second image based on two reconstructed images. Preferably, the weighting coefficient of the high frequency images is 3/4 and the weighting coefficients of the inverse predictions are 1/2. The weighting coefficient of the low frequency image is preferably equal to 2 and the weighting coefficients of the predictions of the second image are preferably equal to -1/2. Such a concrete embodiment corresponds to a modification of the inverse 5/3 lifting scheme described above.

According to a further preferred embodiment, the reconstructing steps are repeatedly applied in such a manner that the resulting reconstructed images are employed as low frequency images for the repeated application. Preferably, the reconstructing steps are applied a predetermined number p of stages. Accordingly, a sequence of $2^P$ images is reconstructed on the basis of one low frequency image and $2^{P-1}$ high frequency images. An example for p=3 can be derived by inverting the procedure illustrated in Fig. 2.

According to a preferred embodiment, the predetermined prediction rule applied in a decoder according to the present invention includes plurality of motion vectors. Preferably, the predetermined prediction rule is based on motion compensation.

All the above mentioned particular decoding embodiments correspond to the respective encoding embodiments. Therefore, for all particular embodiments of an encoder, the present invention provides a decoder that is adapted to reconstruct images encoded by the respective encoder embodiment with maximum accuracy.

Further embodiments of the present invention are subject matter of dependent claims.

Additional features and advantages of the present invention will become apparent from the following and more particular description as illustrated in the accompanying drawings, wherein,

Fig. 1 is a scheme for illustrating the main steps of predictive encoding by applying motion compensation and motion estimation;

Fig. 2 illustrates, in an exemplary embodiment, the main principle of a motion compensated temporal filtering (MCTF) based video coding scheme;

Fig. 3 is a block diagram illustrating the basic configuration of MCTF-based encoding and decoding using a direct and an inverted Haar lifting scheme, respectively;

Fig. 4 is a block diagram of MCTF-based video encoding and decoding using direct and inverse lifting according to a 5/3 lifting scheme;

Fig. 5 is a diagram showing experimental rate distortion curves comparing standard H.264/AVC and the MCTF extensions of H.264/AVC;

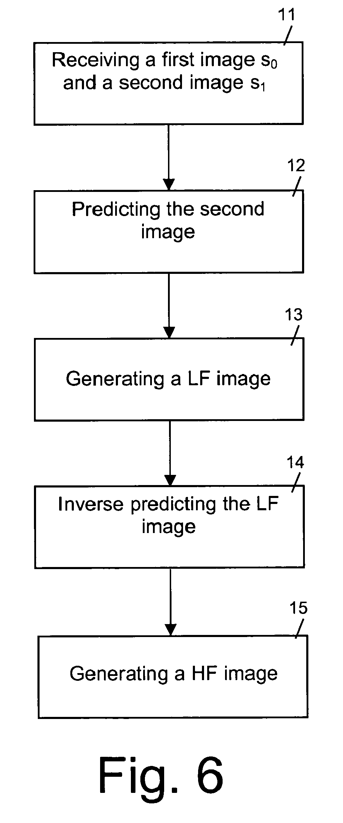

Fig. 6 is a flow chart of the encoding method according to the present invention;

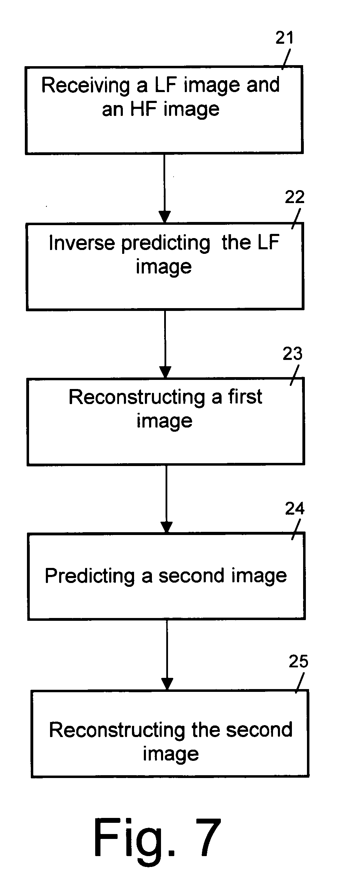

Fig. 7 is a flow chart of the decoding method according to the present invention;

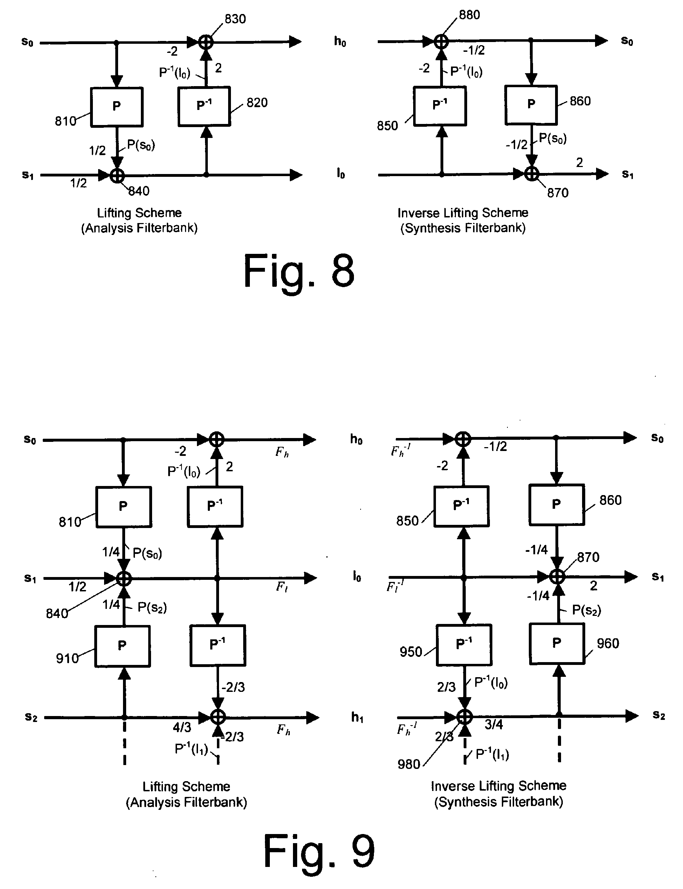

Fig. 8 illustrates the basic configuration of a lifting scheme in accordance with the present invention; and

Fig. 9 illustrates a modification of a direct and an inverse 5/3 lifting scheme in accordance with the present invention.

Illustrative embodiments of the present invention will now be described with reference to the drawings.

The present invention relates to a scheme of encoding and decoding video images based on motion compensated temporal filtering (MCTF) employing a lifting scheme. Specifically, in the scheme according to the present invention, the relationship between the accuracy of the low and high frequency images to be transmitted, is changed. In a conventional MCTF video image coding scheme, employing a lifting scheme as illustrated in Figs. 3 and 4, the high frequency image component is generated by a single prediction step while for the generation of the low frequency image component an update step (including inverse prediction) has additionally to be taken into account. Therefore, inaccurate motion compensated prediction influences the high frequency image only once, and the -more important-low frequency image twice.

In order to overcome this prior art drawback, the present invention employs a different lifting scheme. For this purpose, the new lifting scheme requires only a single prediction step to obtain the low frequency component.

The high frequency component can then be calculated in a two step manner, namely by additionally applying an inverse prediction to the low frequency image. Currently, the bit rate of the low frequency images is reduced by 10% to 15% and additionally the picture quality of the low frequency signal is improved.

Fig. 6 is a flowchart illustrating the basic steps of a procedure for decomposing an image sequence into low frequency and high frequency image components in an encoder according to the present invention. In a first step (11) a first image and a second image are received. In the second step (12) a prediction of the second image based on the first image is generated using a predetermined prediction rule.

Preferably, the prediction is based on motion compensation employing a motion vector field, which indicates the motion of image objects.

Step 13 generates a low frequency image by linear combining said prediction of the second image and the original second image received in step 11. The low frequency image generated in step 13 is used in a two fold manner. On the one hand, the low frequency image is output for further processing to be transmitted. On the other hand, in step 14 the predetermined prediction rule is applied to the low frequency image in an inverse manner to obtain an inverse prediction of the low frequency image. In step 15 said inverse prediction of the low frequency image is linear combined with the first image received in order to generate the high frequency image.

The basic steps of the inverse procedure of reconstructing the first and the second image based on the low frequency and the high frequency image that is to be performed on the decoder side are illustrated in Fig. 7. In step 21 the decoder receives at least a low frequency image and a high frequency image. In step 22 an inverse prediction of the low frequency image is performed. This prediction step corresponds to the inverse prediction on the encoder side.

On the basis of the result output by step 22 and the high frequency image received in step 21, a first image of the original image sequence is reconstructed by applying a suitable linear combination. In subsequent step 24 a second image of the original image sequence is predicted from the first reconstructed image of step 23 by applying the predetermined prediction rule. In the final step 25 the second image is reconstructed as a linear combination of said prediction of the second image and the received low frequency image.

In accordance with the basic principles of MCTF based video coding schemes, and as described above in connection with Fig. 2, the whole processing of Fig. 6 can be repeatedly performed in a plurality of stages in order to reduce the low frequency information to be transmitted, and to increase coding efficiency. Reconstruction of the complete encoded information is achieved at the decoder side by correspondingly repeating the processing of Fig. 7 in a plurality of stages. The whole processing of Fig. 6 corresponds to a single stage as depicted in Fig. 2, and the whole processing of Fig. 7 corresponds to an inversion of a single stage of Fig. 2, respectively.

A basic scheme for video image encoding and decoding according to the present invention is depicted in Fig. 8. The scheme of Fig. 8 corresponds to the Haar lifting scheme of Fig. 3 in that a high frequency image ($h_0$) and a low frequency image ($l_0$) are obtained from exactly two input images (so and $s_1$), and images $s_0$ and $s_1$ can be reconstructed from these frequency component images $h_0$ and $l_0$. Therefore, the scheme of Fig. 8 may be considered as a modification of the Haar lifting scheme in accordance with the present invention.

In Fig. 8, boxes marked "P" and "$P^{-1}$" indicate a direct and inverse prediction processing as described above. The numbers at the arrows near the combiners indicate the weighting coefficients to be used in a linear combination for the respective images represented by the arrows.

Assuming the particular case of no motion between $s_0$ and $s_1$ (corresponding to formula (2) above), the low frequency signal $l_0$ of Fig. 8 is calculated to

$$l_0 = 1/2\ (s_1 + s_0). \qquad\qquad (11)$$

Thus. The result corresponds to that of the Haar lifting scheme of formula (1). The high frequency signal $h_0$ calculates to

$$h_0 = -2\ s_0 + 2\ l_0 = -2\ s_0 + (s_1 + s_0) = (s_1 - s_0), \qquad\qquad (12)$$

which is also equivalent to the Haar lifting scheme with the filter coefficients as indicated in formula (1).

Only in case of an ideal prediction, i.e. a maximum accurate prediction of the predicted image, the conventional approach (Fig. 3) and the new approach of the present invention (Fig. 8) arrive at the same low and high frequency images. However, all predictions generally cause inaccuracy. As the present invention only requires a single inaccuracy producing prediction step to calculate the low frequency images, an increased coding efficiency is achieved.

As can be seen by applying the operations and weighting coefficients as indicated on the right hand side of Fig. 8, the pictures $s_0$ and $s_1$ can be accurately reconstructed from $h_0$ and $l_0$.

Fig. 9 illustrates a further exemplary embodiment of a direct and an inverse lifting scheme in accordance with the present invention. In the scheme according to Fig. 9, the basic idea of the present invention is applied to the 5/3 lifting scheme of Fig. 4. The direct and inverse prediction steps, P and $P^{-1}$, and the weighting coefficients of the linear combinations are indicated in the same manner as in Fig. 8.

In the lifting scheme according to Fig. 9, the low frequency signal $l_0$ is calculated using the predictions of $s_1$ based on two further input images (so and $s_2$) in a linear combination with the original image $s_1$. The corresponding weighting coefficients employed in the linear combination are ½ for $s_1$ and ¼ for the predictions, respectively. The high frequency signal $h_1$ is calculated from respective inverse predictions, $P^{-1}(l_0)$ and $P^{-1}(l_1)$, of the low frequency signal $l_0$ and a further low frequency image ($l_1$, not shown, indicated by a dashed arrow in the lower left part of Fig. 9). The high frequency image $h_1$ is calculated by a linear combination of the respective inverse prediction results with the original image $s_2$. As can be seen from Fig. 9, the weighting coefficients of the linear combination are 4/3 for $s_2$ and -2/3 for the inverse prediction images, respectively.

These calculations can be expressed by the following equations:

$$l_0 = 1/4 * P(s_0) + 1/2 * s_1 + 1/4 * P(s_2) \qquad\qquad (13)$$

and

$$h_1 = -2/3 * P^{-1}(l_0) + 4/3 * s_2 - 2/3 * P^{-1}(l_1). \qquad\qquad (14)$$

using

$$l_1 = 1/4*P(s_2) + 1/2*s_3 + 1/4*P(s_4) \qquad (15)$$

and assuming

$$s_i = P(s_i) \text{ and } h_i = P^{-1}(h_i), \text{ with } i=0,1,2,3 \qquad (16)$$

$h_1$ can be calculated to

$$h_1 = -2/3*(1/4*s_0 + 1/2*s_1 + 1/4*s_2) + 4/3*s_2 - 2/3*(1/4*s_2 + 1/2*s_3 + \qquad (17)$$
$$1/4*s_4)$$
$$= -2/12*s_0 - 2/6*s_1 - 2/12*s_2 + 4/3*s_2 - 2/12*s_2 - 2/6*s_3 - 2/12*s_4$$
$$= -1/6*s_0 - 2/6*s_1 + 6/6*s_2 - 2/6*s_3 - 1/6*s_4$$

The filtering process of equations (15) and (17) can be expressed by the following filter coefficients

$$\text{Coefficients for low-pass filter: } (1,2,1)/4 \qquad (18)$$

$$\text{Coefficients for high-pass filter: } (-1,-2,6,-2,-1)/6.$$

As can be seen therefrom, in the scheme of Fig. 9 the low frequency image $l_1$ is generated from the data of three subsequent input images $s_2$, $s_3$ and $s_4$ (the latter two not shown), and a high frequency image $h_1$ is calculated on the basis of the data of five subsequent input images (so, $s_1$, $s_2$, $s_3$ and $s_4$).

Consequently, a pair of original images ($s_2$ and $s_3$, now shown) is reconstructed from the data of five decomposed images ($l_0$, $h_1$, $l_1$, $h_2$ and $l_2$, the last two not shown). This can be seen from a prolongation of the inverse scheme on the right hand side of Fig. 9, as indicated by the dashed arrow and the dashed line in the lower part on the right hand side of the figure, and by resolving the corresponding equations that can be derived therefrom as indicated above.

Because of an analogy with the scheme of Fig. 4, the scheme of Fig. 9 can be considered as a modification of the 5/3 lifting in accordance with the present invention.

Although the calculations and explanations described above are based on the exemplary embodiments and modifications of the important Haar and 5/3 filters, the invention is not restricted to these cases. A person skilled in the art is aware that other lifting schemes and concrete weighting coefficients can be used for motion compensated temporal filtering in accordance with the present invention.

For the prediction and update steps, the highly efficient motion model of the H.264/AVC standard can be used. Furthermore, the open-loop structure of a temporal sub-band representation offers the possibility to efficiently incorporate temporal and quality scalability. Specifically, the latter applies to scalability of the signal to noise ratio SNR. Spatial scalability can be added by adapting the spatial scalability concept of the video coding standards, H.262/MPEG-2 Visual, H.263 or MPEG-4 Visual to the sub-band structure obtained by motion compensated temporal filtering MCTF. The scalability can be introduced easily without drift, because MCTF is not based on a recursive prediction loop.

However, the present invention is not limited to a predictor in form of motion compensation, but any other prediction can be applied.

In summary, the present invention relates to an improved scheme for video encoding and decoding based on motion compensated temporal filtering. A sequence of input images is decomposed in low frequency and high frequency image components. In the scheme of the present invention the low frequency image is calculated based on a single motion compensated prediction step. The low frequency component, which is more important for the further processing, can therefore be generated with an improved accuracy. A corresponding decoding scheme enables a reconstruction of so encoded picture sequences as accurate as possible.

**Claims**

1.  A method of encoding a sequence of input images, the method comprising the steps of:

    receiving (11) an input image sequence,
    predicting (12) a second image ($s_1$) of said input image sequence based on a first image ($s_0$) of said input image sequence according to a predetermined prediction rule (MV), and
    decomposing (13, 14, 15) said input image sequence into high frequency and low frequency images ($h_0$, $l_0$),

    **characterized in that**
    said decomposing step generating (13) a low frequency image ($l_0$) by linear combining said predicted second image ($P(s_0)$) and the second image ($s_1$) of said input image sequence.

2.  A method according to claim 1, wherein said decomposing step (13, 14, 15) generating said high frequency image ($h_0$) by
    applying (14) said predetermined prediction rule (MV) in inverse manner to said low frequency image ($l_0$) to obtain an inverse prediction ($P^{-1}(l_0)$) of said low frequency image, and
    linear combining (15) the first image ($s_0$) of said input image sequence and said inverse prediction ($P^{-1}(l_0)$) of said low frequency image.

3.  A method according to claim 1 or 2, further comprising the step of
    predicting said second input image ($s_1$) based on at least a third input image ($s_2$) of said input image sequence, wherein said decomposing step (13, 14, 15) generating said low frequency image ($l_0$) by further including said at least one further prediction ($P(s_2)$) of said second image in said linear combination.

4.  A method according to any of claims 1 to 3, wherein said linear combination for obtaining said low frequency image ($l_0$) applying weighting coefficients to said second image ($s_1$) and said at least one predicted image.

5.  A method according to claim 4, wherein the weighting coefficient of said second image ($s_1$) being equal to the sum of the weighting coefficients of said prediction or predictions of said second image.

6.  A method according to claim 3 and 4, wherein the weighting coefficients of all of said predictions of said second image are equal.

7.  A method according to any of claims 2 to 6, wherein said decomposing step generating said high frequency image ($h_1$) by including the inverse prediction ($P^{-1}(l_1)$) of at least one further low frequency image.

8.  A method according to any of claims 2 to 7, wherein said linear combination for obtaining said high frequency image ($h_0$, $h_1$) applying weighting coefficients to said first image and said inverse prediction of said low frequency image.

9.  A method according to claim 8, wherein the sum of the weighting coefficients for obtaining the high frequency image ($h_0$, $h_1$) is equal to zero.

10. A method according to claim 8 or 9, wherein the sign of the weighting coefficient of said first image ($s_0$) being inverse to the signs of the weighting coefficients of the inverse prediction images.

11. A method according to claim 7 and 8, wherein the weighting coefficients of all inverse prediction images are equal.

12. A method according to any of claims 1, 2, 4, 5 and 8 to 10, wherein the weighting coefficients of said second image ($s_1$) and said predicted second image ($P(s_0)$) are equal to ½.

**13.** A method according to claim 12, wherein the weighting coefficient of said first image ($s_0$) is equal to -2, and the weighting coefficient of the inverse prediction image ($P^{-1}(l_0)$) is equal to 2.

**14.** A method according to any of claims 3 to 11, wherein said decomposing step (13, 14, 15) generating the low frequency image ($l_0$) on the basis of three subsequent images ($s_0$, $s_1$, $s_2$) of the input image sequence.

**15.** A method according to claim 14, wherein said decomposing step (13, 14, 15) generating the high frequency image ($h_1$) on the basis of five subsequent images of the input image sequence.

**16.** A method according to claim 15, wherein said decomposing step (13, 14, 15) generating the low frequency image ($l_0$) by linear combining said second image ($s_1$) of the input image sequence and the predictions ($P(s_0)$, $P(S_2)$) of said second image of the input image sequence on the basis of said first image ($s_2$) and said third image ($s_0$) of said input image sequence, and
said decomposing step (13, 14, 15) generating said high frequency image ($h_1$) by linear combining said first image ($s_2$) of the input image sequence and the inverse predictions ($P^{-1}(l_0)$, $P^{-1}(l_1)$) of two subsequent low frequency images.

**17.** A method according to claim 16, wherein the weighting coefficient of said second image ($s_1$) is ½, and the weighting coefficients of said predicted second images ($P(s_0)$, $P(s_2)$) are ¼.

**18.** A method according to claim 17, wherein the weighting coefficient of said first image ($s_2$) is equal to 4/3, and the weighting coefficients of said inverse predictions ($P^{-1}(l_0)$, $P^{-1}(l_1)$) of low frequency images are equal to -2/3.

**19.** A method according to any of claims 1 to 18, wherein said predicting and decomposing steps (12, 13, 14, 15) are repeatedly applied, such that the resulting low frequency images are employed as input image sequence for the repeated application.

**20.** A method according to claim 19, wherein said predicting and decomposing steps (12, 13, 14, 15) are repeatedly applied a predetermined number of stages.

**21.** A method according to claim 20, wherein said predetermined number of stages m is the maximum possible number of stages for an input image sequence consisting of a predetermined number of input images n.

**22.** A method according to any of claims 1 to 21, wherein said predetermined prediction rule including a plurality of motion vectors.

**23.** A method according to claim 22, wherein said predetermined prediction rule is based on motion compensation.

**24.** A method according to claim 22 or 23, wherein the motion vectors are generated based on motion estimation (ME).

**25.** A method of decoding an encoded sequence of images, the method comprising the step of receiving (21) high frequency and low frequency images ($h_0$, $l_0$) together with a predetermined prediction rule (MV),
**characterized by** further comprising the steps of
reconstructing (22, 23) a first image ($s_0$) of said sequence of images by linear combining a high frequency image ($h_0$) and an inverse prediction of a corresponding low frequency image generated by applying said predetermined prediction rule (MV) in inverse manner to said corresponding low frequency image ($l_0$), and
reconstructing (24, 25) a second image ($s_1$) of said sequence of images by linear combining said low frequency image ($l_0$) and a prediction ($P(s_0)$) of said second image on the basis of said reconstructed first image ($s_0$) according to said predetermined prediction rule (MV).

**26.** A method according to claim 25, wherein said step of reconstructing a first image (22, 23) of said sequence of images reconstructs said first image ($s_2$) by including an inverse prediction ($P^{-1}(l_1)$) of at least one further low frequency image in the linear combination.

**27.** A method according to claim 25 or 26, wherein said linear combination for reconstructing said first image (so, $s_2$) applying weighting coefficients to said high frequency image ($h_0$, $h_1$) and said inverse predictions ($P^{-1}(l_0)$, $P^{-1}(l_1)$) of low frequency images.

**28.** A method according to claim 26 and 27, wherein the weighting coefficients of all of said inverse predictions of low frequency images are equal.

29. A method according to any of claims 25 to 28, wherein said step of reconstructing a second image (24, 25) of said sequence of images reconstructs said second image ($s_1$) by including in said linear combination for reconstructing said second image at least one further prediction of said second image ($P(s_2)$) on the basis of a third reconstructed image ($s_2$), said third reconstructed image ($s_2$) being reconstructed by linear combining a high frequency image ($h_1$) and an inverse prediction ($P^{-1}(l_0)$) of a low frequency image.

30. A method according to any of claims 25 to 29, wherein said linear combination for reconstructing said second image ($s_1$) applying weighting coefficients to said low frequency image ($l_0$) and said predictions of said second image.

31. A method according to claim 30, wherein the sign of the weighting coefficient of said low frequency image ($l_0$) being inverse to the signs of the weighting coefficients of said predicted second images.

32. A method according to claim 29 and 30, wherein the weighting coefficients of all predictions of said second image are equal.

33. A method according to any of claims 25, 27, 30 and 31, wherein the weighting coefficient of said high frequency image ($h_0$) is equal to -1/2 and the weighting coefficient of said inverse prediction ($P^{-1}(l_0)$) of said low frequency image is equal to 1.

34. A method according to claim 33, wherein the weighting coefficient of said low frequency image ($l_0$) is equal to 2, and the weighting coefficient of said prediction of said second image is equal to -1.

35. A method according to any of claims 25 to 32, wherein said step of reconstructing a first image (22, 23) of said sequence of images reconstructs said first image ($s_2$) on the basis of one high frequency and two low frequency images.

36. A method according to claim 35, wherein said step of reconstructing a second image (24, 25) of said sequence of images reconstructs said second image on the basis of three low frequency and two high frequency images.

37. A method according to claim 36, wherein said step of reconstructing a first image (22, 23) of said sequence of images reconstructs said first image ($s_2$) by linear combining one high frequency image ($h_1$) and the inverse predictions ($P^{-1}(l_0)$, $P^{-1}(l_1)$) of two low frequency images, and
said step of reconstructing a second image (24, 25) of said sequence of images reconstructs said second image ($s_1$) by linear combining a low frequency image ($l_0$) and predictions ($P(s_0)$, $P(s_2)$) of said second image based on two reconstructed images.

38. A method according to claim 37, wherein the weighting coefficient of said high frequency image ($h_1$) is %, and the weighting coefficients of said inverse predictions are ½.

39. A method according to claim 38, wherein the weighting coefficient of said low frequency image ($l_0$) is equal to 2, and the weighting coefficients of said predictions of said second image are equal to -1/2.

40. A method according to any of claims 25 to 39, wherein said reconstructing steps (22, 23, 24, 25) are repeatedly applied, such that the resulting reconstructed images are employed as low frequency images for the repeated application.

41. A method according to claim 40, wherein said reconstructing steps (22, 23, 24, 25) are applied a predetermined number p of stages.

42. A method according to claim 41, wherein a sequence of $2^p$ images is reconstructed on the basis of one low frequency and $2^p - 1$ high frequency images.

43. A method according to any of claims 25 to 42, wherein said predetermined prediction rule including a plurality of motion vectors.

44. A method according to claim 43, wherein said predetermined prediction rule is based on motion compensation.

**45.** An encoder for encoding a sequence of input images, comprising:

a predictor (810) for predicting a second image ($s_1$) of said input image sequence based on a first image ($s_0$) of said input image sequence according to a predetermined prediction rule (MV), and

decomposing means for decomposing said input image sequence into high frequency and low frequency images ($h_0$, $l_0$),

**characterized in that**
said decomposing means including a first combiner (840) for generating a low frequency image ($l_0$) by linear combining said predicted second image ($P(s_0)$) and the second image ($s_1$) of said input image sequence.

**46.** An encoder according to claim 45, wherein said decomposing means including
an inverse predictor (820) for applying said predetermined prediction rule (MV) in inverse manner to said low frequency image ($l_0$) to obtain an inverse prediction ($P^{-1}(l_0)$) of said low frequency image, and
a second combiner (830) for generating said high frequency image ($h_0$) by linear combining the first image ($s_0$) of said input image sequence and said inverse prediction ($P^{-1}(l_0)$) of said low frequency image ($l_0$).

**47.** An encoder according to claim 45 or 46, comprising
at least a further predictor (910) for predicting said second input image ($s_1$) based on at least a third input image ($s_2$) of said input image sequence, wherein
said first combiner (840) generating said low frequency image ($l_0$) by further including said at least one further prediction of said second image ($P(s_2)$) in said linear combination.

**48.** An encoder according to any of claims 45 to 47, wherein said second combiner (830) applies weighting coefficients to said second image ($s_1$) and said at least one predicted image.

**49.** An encoder according to claim 48, wherein the weighting coefficient of said first image ($s_1$) being equal to the sum of the weighting coefficients of said prediction or predictions of said first image.

**50.** An encoder according to claim 48 and 49, wherein the weighting coefficients of all of said predictions of said first image are equal.

**51.** An encoder according to any of claims 46 to 50, wherein said decomposing means generating said high frequency image ($h_1$) by including the inverse prediction ($P^{-1}(l_1)$) of at least one further low frequency image.

**52.** An encoder according to any of claims 46 to 51, wherein said linear combination for obtaining said high frequency image ($h_0$, $h_1$) applying weighting coefficients to said first image and said inverse prediction of said low frequency image.

**53.** An- encoder according to claim 52, wherein the sum of the weighting coefficients for obtaining the high frequency image ($h_0$, $h_1$) is equal to zero.

**54.** An encoder according to claim 52 or 53, wherein the sign of the weighting coefficient of said first image ($s_0$) being inverse to the signs the weighting coefficients of the inverse prediction images.

**55.** An encoder according to claim 51 and 52, wherein the weighting coefficients of all inverse prediction images are equal.

**56.** An encoder according to any of claims 45, 46, 48, 49 and 52 to 54, wherein the weighting coefficients of said second image ($s_1$) and said predicted second image ($P(s_0)$) are equal to ½.

**57.** An encoder according to claim 56, wherein the weighting coefficient of said first image ($s_0$) is equal to -2, and the weighting coefficient of the inverse prediction image ($P^{-1}(l_0)$) is equal to 2.

**58.** An encoder according to any of claims 47 to 55, wherein said decomposing means generating the low frequency image ($l_0$) on the basis of three subsequent images ($s_0$, $s_1$, $s_2$) of the input image sequence.

**59.** An encoder according to claim 58, wherein said decomposing means generating the high frequency image ($h_1$) on the basis of five subsequent images of the input image sequence.

**60.** An encoder according to claim 59, wherein said decomposing means generating the low frequency image ($l_0$) by linear combining the second image ($s_1$) of the input image sequence and the predictions ($P(s_0)$, $P(s_2)$) of said second image of the input image sequence on the basis of the first image ($s_2$) and the third image ($s_0$) of said input image sequence, and generating the high frequency image ($h_1$) by linear combining said first image ($S_2$) of the input image sequence and the inverse predictions ($P^{-1}(l_0)$, $P^{-1}(l_1)$) of two subsequent low frequency images.

**61.** An encoder according to claim 60, wherein the weighting coefficient of said second image ($s_1$) is ½, and the weighting coefficients of said predicted second ($P(s_0)$, $P(s_2)$) images are ¼.

**62.** An encoder according to claim 61, wherein the weighting coefficients of said first image ($s_2$) is equal to 4/3, and the weighting coefficients of said inverse predictions ($P^{-1}(l_0)$, $P^{-1}(l_1)$) of low frequency images are equal to -2/3.

**63.** An encoder according to any of claims 45 to 62, wherein said predetermined prediction rule including a plurality of motion vectors.

**64.** An encoder according to claim 63, wherein said predetermined prediction rule is based on motion compensation.

**65.** An encoder according to claim 63 or 64, wherein said predicting means (810, 910) including a motion estimator (110) for generating said motion vectors.

**66.** A decoder for decoding an encoded sequence of images comprising receiving means for receiving high frequency and low frequency images ($h_0$, $l_0$) together with a predetermined prediction rule (MV),
**characterized by**
a first reconstructor for reconstructing a first image ($s_0$) of said sequence of images including an inverse predictor (850) for inverse predicting a low frequency image ($l_0$) by applying said predetermined prediction rule (MV) in inverse manner to said low frequency image ($l_0$), and a first combiner (880) for linear combining said inverse prediction ($P^{-1}(l_0)$) of said low frequency image and a corresponding high frequency image ($h_0$) and
a second reconstructor for reconstructing a second image ($s_1$) of said sequence of images including a predictor (860) for predicting said second image on the basis of said reconstructed first image ($s_0$) according to said predetermined prediction rule (MV) and a second combiner (870) for linear combining said low frequency image ($l_0$) and said prediction ($P(s_0)$) of said second image.

**67.** A decoder according to claim 66, wherein said first reconstructor including at least one further inverse predictor (950) for inverse predicting a low frequency image ($l_1$), and said first combiner (880) being adapted to include an inverse prediction ($P^{-1}(l_1)$) of at least one further low frequency image in the linear combination for reconstructing said first image ($s_2$).

**68.** A decoder according to claim 66 or 67, wherein said first combiner (880) applying weighting coefficients to said high frequency image ($h_0$, $h_1$) and said inverse predictions ($P^{-1}(l_0)$, $P^{-1}(l_1)$) of low frequency images.

**69.** A decoder according to claim 67 and 68, wherein the weighting coefficients of all of said inverse predictions of low frequency images are equal.

**70.** A decoder according to any of claims 66 to 69, wherein said second reconstructor including at least one further predictor (960) for predicting said second image on the basis of a third reconstructed image ($s_2$), said third reconstructed image ($s_2$) being a linear combination of a high frequency image ($h_1$) and an inverse prediction ($P^{-1}(l_0)$) of a low frequency image, and said second combiner (870) being adapted to include said at least one further prediction ($P(s_2)$) of said second image ($s_2$) in the linear combination for reconstructing said second image ($s_1$) .

**71.** A decoder according to any of claims 66 to 70, wherein said second combiner applying weighting coefficients to said low frequency image ($l_0$) and said predictions of said second image.

**72.** A decoder according to claim 71, wherein the sign of the weighting coefficient of said low frequency image ($l_0$) being inverse to the signs of the weighting coefficients of said predicted second images.

**73.** A decoder according to claim 70 and 71, wherein the weighting coefficients of all predictions of said second image are equal.

**74.** A decoder according to any of claims 66, 68, 71 and 72, wherein the weighting coefficient of said high frequency image ($h_0$) is equal to -1/2 and the weighting coefficient of said inverse prediction ($P^{-1}(l_0)$) of said low frequency image is equal to 1.

**75.** A decoder according to claim 74, wherein the weighting coefficient of said low frequency image ($l_0$) is equal to 2, and the weighting coefficient of said prediction of said second image is equal to -1.

**76.** A decoder according to any of claims 66 to 73, wherein said first reconstructor reconstructing said first image ($s_2$) on the basis of one high frequency and two low frequency images.

**77.** A decoder according to claim 76, wherein said second reconstructor reconstructing said second image on the basis of three low frequency and two high frequency images.

**78.** A decoder according to claim 77, wherein said first combiner (980) linear combining one high frequency image ($h_1$) and the inverse predictions ($P^{-1}(l_0)$, $P^{-1}(l_1)$) of two low frequency images for reconstructing said first image ($s_2$), and said second combiner (870) linear combining a low frequency image ($l_0$) and predictions ($P(s_0)$, $P(s_2)$) of said second image based on two reconstructed images for reconstructing said second image ($s_1$).

**79.** A decoder according to claim 78, wherein the weighting coefficient of said high frequency image ($h_1$) is ¾, and the weighting coefficients of said inverse predictions are ½.

**80.** A decoder according to claim 79, wherein the weighting coefficient of said low frequency image ($l_0$) is equal to 2, and the weighting coefficients of said predictions of said second image are equal to-1/2.

**81.** A decoder according to any of claims 66 to 80, wherein said predetermined prediction rule (MV) including a plurality of motion vectors.

# Fig. 1

# Fig. 2

Lifting Scheme
(Analysis Filterbank)

Inverse Lifting Scheme
(Synthesis Filterbank)

# Fig. 3

Lifting Scheme
(Analysis Filterbank)

Inverse Lifting Scheme
(Synthesis Filterbank)

# Fig. 4

Fig. 5

11

Receiving a first image $s_0$
and a second image $s_1$

12

Predicting the second
image

13

Generating a LF image

14

Inverse predicting the LF
image

15

Generating a HF image

# Fig. 6

21

```
┌─────────────────────────────┐
│   Receiving a LF image and   │
│        an HF image           │
└─────────────────────────────┘
                │
                ▼
```

22

```
┌─────────────────────────────┐
│   Inverse predicting  the LF │
│           image              │
└─────────────────────────────┘
                │
                ▼
```

23

```
┌─────────────────────────────┐
│    Reconstructing a first    │
│           image              │
└─────────────────────────────┘
                │
                ▼
```

24

```
┌─────────────────────────────┐
│                              │
│    Predicting a second image │
│                              │
└─────────────────────────────┘
                │
                ▼
```

25

```
┌─────────────────────────────┐
│   Reconstructing the second  │
│           image              │
└─────────────────────────────┘
```

# Fig. 7

Lifting Scheme
(Analysis Filterbank)

Inverse Lifting Scheme
(Synthesis Filterbank)

# Fig. 8

Lifting Scheme
(Analysis Filterbank)

Inverse Lifting Scheme
(Synthesis Filterbank)

# Fig. 9

**European Patent Office**

**EUROPEAN SEARCH REPORT**

Application Number

EP 05 00 7091

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | KARLSSON G ET AL: "Three dimensional sub-band coding of video" 11 April 1988 (1988-04-11), , PAGE(S) 1100-1103 , XP010073011 * page 1101, last paragraph; figure 2 * ----- | 1,25,45, 66 | H04N7/26 |
| A | D:S: TURAGA, M. VAN DER SCHAAR: "unconstrained motion compensated temporal filtering" ISO/IEC JTC1/SC29/WG11 M8388, May 2002 (2002-05), pages 1-15, XP002344863 fairfax * pages 7,8,9 * ----- | 1-81 | |

TECHNICAL FIELDS
SEARCHED       (Int.Cl.7)

H04N

The present search report has been drawn up for all claims

| Place of search | Date of completion of the search | Examiner |
|---|---|---|
| Berlin | 16 September 2005 | Raeymaekers, P |

EPO FORM 1503 03.82 (P04C01)